Europäisches Patentamt

**European Patent Office**

**Office européen des brevets**

(19)

(11) Numéro de publication: **0 213 104**
**A2**

(12) # DEMANDE DE BREVET EUROPEEN

(21) Numéro de dépôt: **86870108.7**

(22) Date de dépôt: **01.08.86**

(51) Int. Cl.⁴: **G 02 B 27/00**, B 23 K 26/02

(30) Priorité: **09.08.85 LU 86037**

(43) Date de publication de la demande: **04.03.87**
**Bulletin 87/10**

(84) Etats contractants désignés: **AT DE FR GB IT NL SE**

(71) Demandeur: **CENTRE DE RECHERCHES METALLURGIQUES CENTRUM VOOR RESEARCH IN DE METALLURGIE Association sans but lucratif, Vereniging zonder winstoogmerk Rue Montoyer, 47, B-1040 Bruxelles (BE)**

(72) Inventeur: **Crahay, Jean René, Ster 307, B-4878 Francorchamps (BE)**

(74) Mandataire: **Lacasse, Lucien Emile et al, CENTRE DE RECHERCHES METALLURGIQUES Abbaye du Val-Benoît 11, rue Ernest Solvay, B-4000 Liège (BE)**

(54) Dispositif de compensation de la trajectoire d'un faisceau laser et procédé pour sa mise en oeuvre.

(57) Le dispositif de compensation comporte, sur la trajectoire du faisceau laser entre l'émetteur (1) et l'unité d'utilisation (5), des moyens de compensation (2) mobiles comprenant au moins deux surfaces réfléchissantes (3,4) disposées sur le trajet du faisceau laser, les axes normaux aux plans des deux surfaces réfléchissantes étant de préférence orthogonaux et les surfaces réfléchissantes étant placées de telle sorte que le faisceau laser sortant desdits moyens de compensation soit parallèle au faisceau y entrant, les surfaces réfléchissantes étant mobiles séparément et/ou simultanément, leur déplacement étant assujetti à la condition que la trajectoire parcourue par le faisceau laser depuis l'émetteur jusqu'à l'unité d'utilisation doit être égale à une constante.

## Dispositif de compensation de la trajectoire d'un faisceau laser et procédé pour sa mise en oeuvre.

La présente invention concerne un dispositif de compensation de la tra-jéctoire d'un faisceau laser et un procédé pour sa mise en oeuvre.

Il est connu, à l'heure actuelle, d'utiliser un faisceau de rayonnement énergétique, par exemple du type laser, pour travailler des pièces métalliques ou autres. Le présent demandeur a lui-même développé et décrit dans des demandes de brevet antérieures, divers systèmes de ce type, permettant de travailler la surface des cylindres de laminoir en vue de leur conférer une rugosité de surface déterminée.

La présente invention peut être appliquée dans pratiquement tous les domaines où l'on utilise un laser, par exemple le découpage, le perçage, le soudage, les traitements thermiques, etc...

0213104

Dans la pratique courante, le schéma classique comprend un dispositif émetteur qui envoie un faisceau laser vers une unité d'utilisation qui le focalise éventuellement et le transmet vers la pièce à traiter.

Dans de nombreuses applications, les différents éléments, à savoir le dispositif émetteur et l'unité d'utilisation composant le schéma précité sont mobiles l'un par rapport à l'autre.

Dans ces cas, la distance optique d parcourue par le faisceau laser c'est-à-dire la distance entre le dispositif émetteur et l'unité d'utilisaion, varie au cours du travail avec pour conséquence une modification du diamètre du faisceau lors de son entrée dans l'unité d'utilisation. L'ordre de grandeur de la variation du diamètre étant de 1,5 à 5 mm par mètre de variation de la distance d, on comprend que cette variation peut avoir des conséquences néfastes sur la pièce à traiter. C'est ainsi que dans le cas du traitement thermique d'une pièce pour lequel le faisceau n'est pas focalisé, une variation du diamètre du faisceau a pour conséquence une variation de la densité de puissance et modifie donc le régime thermique de la pièce traitée. Dans les autres cas de traitement, pour lesquels le faisceau est focalisé, on observe également des variations de la densité de puissance du faisceau focalisé lors de son impact sur la pièce.

La présente invention a pour but de présenter un dispositif et un procédé qui permettent d'annuler les effets néfastes liés à la variation de la distance optique d.

Le dispositif de la présente invention, comprenant un émetteur d'un faisceau laser et une unité d'utilisation du faisceau laser mobile par rapport audit émetteur , est essentiellement caractérisé en ce qu'il comporte, sur la trajectoire du faisceau laser entre l'émetteur et l'unité d'utilisation, des moyens de compensation, destinés à annuler toute variation de la distance d parcourue par le faisceau laser entre l'émetteur et l'unité d'utilisation.

0213104

Suivant l'invention, les moyens de compensation sont mobiles suivant une direction parallèle à la direction du déplacement relatif de l'unité d'utilisation.

Suivant un mode de réalisation particulier du dispositif de l'invention, lesdits moyens de compensation comprennent au moins une surface mobile qui réfléchit le faisceau laser, le déplacement de la surface réfléchissante étant régi par la condition que la distance d parcourue par le faisceau laser depuis l'émetteur jusqu'à l'unité d'utilisation doit être égale à une constante.

Suivant un autre mode de réalisation du dispositif de l'invention, lesdits moyens de compensation comprennent au moins deux surfaces réfléchissantes planes disposées sur le trajet du faisceau laser, les axes normaux aux plans des deux surfaces réfléchissantes étant de préférence orthogonaux et les surfaces réfléchissantes étant placées de telle sorte que le faisceau laser sortant desdits moyens de compensation soit parallèle au faisceau y entrant, les surfaces réfléchissantes étant mobiles séparément et/ou simultanément, leur déplacement étant assujetti à la condition que la distance d parcourue par le faisceau laser depuis l'émetteur jusqu'à l'unité d'utilisation doit être égale à une constante.

Suivant encore un autre mode de réalisation du dispositif de l'invention précité, les déplacements des surfaces réfléchissantes rencontrées par le faisceau laser sont commandés par un ensemble de poulies et de câbles.

Egalement suivant un mode de réalisation du dispositif de l'invention, les déplacements des surfaces réfléchissantes rencontrées par le faisceau laser sont régis par un ensemble comprenant des capteurs de position et/ou des codeurs digitaux et un système de boucles de réaction agissant sur les dispositifs porteurs desdites surfaces réfléchissantes.

La présente invention porte également sur un procédé pour maintenir constante la distance d parcourue par le faisceau laser depuis l'émetteur jusqu'à l'unité d'utilisation.

Le procédé de l'invention, dans lequel on émet un faisceau laser au moyen d'un dispositif émetteur, on reçoit ledit faisceau laser dans une unité d'utilisation et on le transmet ensuite vers une pièce à traiter, est carctérisé en ce que l'on interpose sur la trajectoire du faisceau laser entre l'émetteur et l'unité d'utilisation, des moyens de compensation mobiles et en ce que l'on commande le déplacement desdits moyens de compensation pour annuler toute variation de la distance d parcourue par le faisceau laser entre l'émetteur et l'unité d' utilisation.

Suivant une première mise en oeuvre du procédé de l'invention, on détecte simultanément ou non la position de l'émetteur et/ou de l'unité d'utilisation du faisceau laser, on détermine la distance réelle parcourue par le faisceau laser entre l'émetteur et l'unité d'utilisation, on détermine l'écart entre cette distance réelle et une distance d de référence et on commande le déplacement desdits moyens de compensation de façon à annuler ledit écart.

Suivant une mise en oeuvre particulière du procédé de l'invention, on déplace lesdits moyens de compensation suivant une direction parallèle à la direction du déplacement relatif de l'unité d'utilisation, à une vitesse égale à la moitié de la vitesse relative de l'unité d'utilisasation suivant ladite direction.

L'invention pourra être mieux comprise à partir de la description qui suit, en faisant référence aux dessins annexés dans lesquels la

figure 1 illustre le principe du dispositif avec des moyens de compensation, conforme à l'invention, et la

figure 2 représente schématiquement une réalisation pratique de moyens de compensation et de leur système de commande applicable au dispositif de la figure 1.

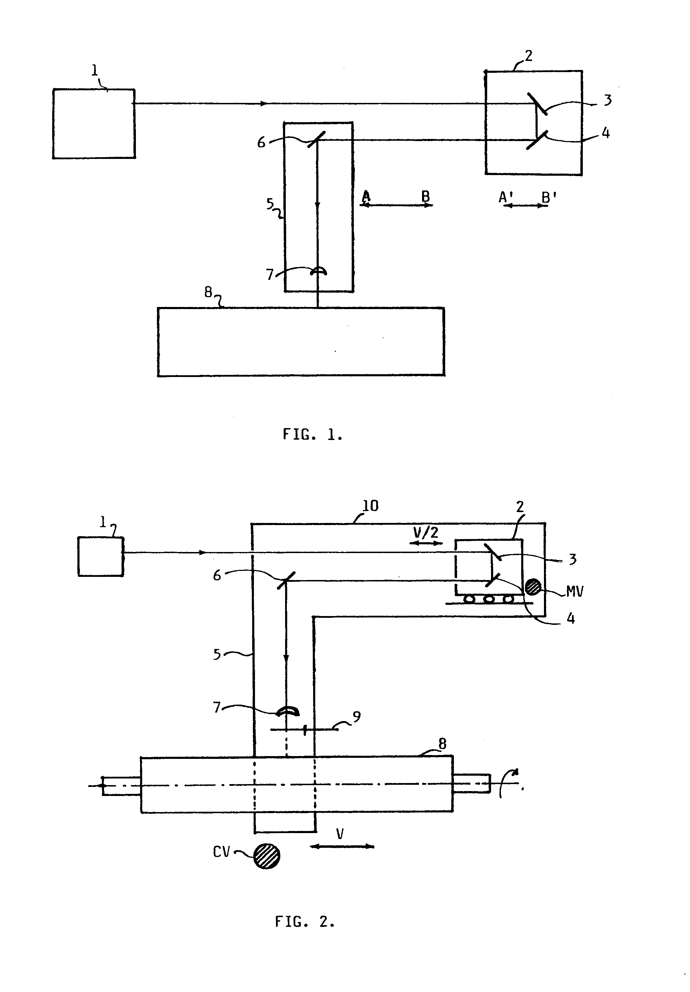

Dans la figure 1, on distingue l'émetteur laser (1), les moyens de compensation (2), comprenant deux miroirs (3), (4), une unité d'utilisation (5) comprenant un miroir (6) et une lentille de focalisation (7); on y distingue également la pièce à traiter (8), qui est fixe. A tout déplacement de l'unité d'utilisation (5), par exemple suivant le vecteur A B, on associe un déplacement des moyens de compensation (2) suivant le vecteur A' B', de telle manière que la distance parcourue par le faisceau laser depuis l'émetteur laser (1) jusqu'à l'unité d'utilisation (5) reste constante.

La figure 2 illustre l'application d'un dispositif conforme à la figure 1 dans le cas du traitement de la surface d'un cylindre de laminoir au moyen d'un faisceau laser intermittent.

Dans cette figure, les éléments correspondants sont désignés par les mêmes repères numériques que dans la figure 1. La pièce à traiter est ici un cylindre de laminoir, qui est animé d'un mouvement de rotation. Le faisceau laser émis par l'émetteur 1 est rendu intermittent au moyen d'un disque hacheur 9 avant de frapper le cylindre. L'unité d'utilisation 5 est dans ce cas une tête de gravure comportant un miroir 6, une lentille 7 et un disque hacheur 9, et se prolongeant par une enceinte 10 qui enveloppe les moyens de compensation 2, 3, 4 et protège le faisceau laser.

La tête de gravure se déplace à la vitesse V suivant l'axe longitudinal du cylindre, de sorte que le faisceau laser intermittent décrit une trajectoire hélicoïdale à la surface du cylindre. Un capteur de vitesse CV détecte cette vitesse V à tout instant et impose la même vitesse à un moteur MV. En particulier, CV et MV peuvent être les deux composantes d'un "arbre électrique", c'est-à-dire un système de moteurs tournant à vitesse égale. Par une transmission mécanique appropriée, par exemple de poulies et de courroies ou d'engrenages réducteurs, le moteur MV déplace les moyens 2, 3, 4 dans le sens approprié, avec une vitesse V/2, par rapport à l'enceinte 10.

0213104

En pratique, la vitesse V est généralement comprise entre 10 mm/min et 60 mm/min.

L'invention a été décrite ci-dessus en se référant à des moyens de compensation comportant des miroirs angulairement fixes et mobiles en translation parallèlement à la direction du déplacement de l'unité d'utilisation.Il ne sortirait cependant pas du cadre de l'invention d'assurer la compensation de la distance d au moyen de miroirs à inclinaison réglable disposés par exemple dans une enceinte fixe.

Revendications.

1. Dispositif de compensation de la trajectoire d'un faisceau làser comprenant un émetteur d'un faisceau laser et une unité d'utilisation du faisceau laser, mobile par rapport audit émetteur, caractérisé en ce qu'il comporte, sur la trajectoire du faisceau laser entre l'émetteur et l'unité d'utilisation, des moyens de compensation mobiles destinés à annuler toute variation de la distance parcourue par le faisceau laser entre l'émetteur et l'unité d'utilisation.

2. Dispositif suivant la revendication 1, caractérisé en ce que lesdits moyens de compensation sont mobiles suivant une direction parallèle à la direction du déplacement relatif de l'unité d'utilisation.

3. Dispositif suivant l'une des revendications 1 ou 2, caractérisé en ce que lesdits moyens de compensation comprennent au moins une surface mobile qui réfléchit le faisceau laser, le déplacement de la surface réfléchissante étant régi par la condition que la trajectoire parcourue par le faisceau laser depuis l'émetteur jusqu'à l'unité d'utilisation doit être égale à une constante.

4. Dispositif suivant l'une des revendications 1 ou 2, caractérisé en ce que lesdits moyens de compensation comprennent au moins deux surfaces réfléchissantes disposées sur le trajet du faisceau laser, les axes normaux aux plans des deux surfaces réfléchissantes étant de préférence orthogonaux et les surfaces réfléchissantes étant placées de telle sorte que le faisceau laser sortant desdits moyens de compensation soit parallèle au faisceau y entrant, les surfaces réfléchissantes étant mobiles séparément et/ou simultanément, leur déplacement étant assujetti à la condition que la trajectoire parcourue par le faisceau laser depuis l'émetteur jusqu'à l'unité d'utilisation doit être égale à une constante.

5. Dispositif suivant les revendications 3 ou 4, caractérisé en ce que les déplacements des surfaces réfléchissantes rencontrées par le faisceau laser sont commandés par un ensemble de poulies et de câbles.

6. Dispositif suivant l'une ou l'autre des revendications 3 à 5, caractérisé en ce que les déplacements des surfaces réfléchissantes rencontrées par le faisceau laser sont régis par un ensemble comprenant des capteurs de position et/ou des codeurs digitaux et un système de boucles de réaction agissant sur les dispositifs porteurs desdites surfaces réfléchissantes.

7. Procédé pour la mise en oeuvre d'un dispositif conforme à l'une des revendications 1 à 6, dans lequel on émet un faisceau laser au moyen d'un dispositif émetteur, on reçoit ledit faisceau laser dans une unité d'utilisation et on le transmet ensuite vers une pièce à traiter, caractérisé en ce que l'on interpose sur la trajectoire du faisceau laser entre l'émetteur et l'unité d'utilisation, des moyens de compensation mobiles et en ce que l'on commande le déplacement desdits moyens de compensation pour annuler toute variation de la distance parcourue par le faisceau laser entre l'émetteur et l'unité d'utilisation.

8. Procédé suivant la revendication 7, caractérisé en ce que l'on détecte, simultanément ou non, la position de l'émetteur et/ou de l'unité d'utilisation du faisceau laser, on détermine la distance réelle parcourue par le faisceau laser entre l'émetteur et l'unité d'utilisation, on détermine l'écart entre cette distance réelle et une distance d de référence et on commande le déplacement desdits moyens de compensation de façon à annuler ledit écart.

9. Procédé suivant l'une des revendications 7 ou 8, caractérisé en ce que l'on déplace lesdits moyens de compensation suivant une direction parallèle à la direction du déplacement relatif de l'unité d'utilisation, à une vitesse égale à la moitié de la vitesse relative de l'unité d'utilisation suivant cette direction.

FIG. 1.

FIG. 2.